# EUROPÄISCHE PATENTANMELDUNG

(11) **EP 0 795 987 A2**
(43) Veröffentlichungstag der Anmeldung: **17.09.1997**
(21) Anmeldenummer: 97102462.5
(22) Anmeldetag: 15.02.1997
(51) Int. Cl.: H04M 1/02

(54) **Gehäuse für ein Kommunikations-Endgerät**

(30) Priorität: 13.03.1996 DE 19609791
(71) Anmelder: DeTeWe - Deutsche Telephonwerke Aktiengesellschaft & Co., 10997 Berlin (DE)
(72) Erfinder: Hübner, Werner, 12045 Berlin (DE); Morlok, Walter, 12279 Berlin (DE)

(57) **Zusammenfassung**

Das Gehäuse für ein Kommunikations-Endgeräte besteht aus einer Kappe (10) und einer Bodenplatte (20), wobei die Bodenplatte (20) aus Metall als Stanz- und Biegeteil gestaltet ist und in Verbindung mit einer Leiterplatte (30) und entsprechender Schraubkontaktierung (21) einen Faraday'schen Käfig bildet.

## Beschreibung

Die Erfindung bezieht sich auf ein Gehäuse für ein Kommunikations-Endgerät.

Kommunikations-Endgeräte, z. B. Telefone, sind allgemein aus einer Unterschale und einer Oberschale zusammengesetzt, die miteinander durch Verschrauben und/oder Rastungen verbunden sind. Der Aufwand für die Spritzwerkzeuge der Gehäuseschalen ist hoch, insbesondere bei relativ kleinen Stückzahlen, die sich aus dem schnellen Wechsel von Kundenwünschen hinsichtlich der Formgebung ergeben.

Der Erfindung lag die Aufgabe zugrunde, ein Gehäuse für Kommunikations-Endgeräte zu schaffen, das mit geringem wirtschaftlichem Aufwand herstellbar ist.

Diese Aufgabe ist durch die Erfindung gelöst, wie sie im Anspruch 1 dargelegt ist. Weitere vorteilhafte Merkmale sind Gegenstand der Unteransprüche.

Der Vorteil der Erfindung besteht in der Verwendung einer Metallplatte anstelle einer Kunststoffbodenwanne. Dadurch ergeben sich erhebliche Einsparungen an Werkzeugkosten, da anstelle von Spritzformen Schnittwerkzeuge und Stanzen verwendet werden. Eine leichte Montage ist gewährleistet. Außerdem ist mittels einer Metallplatte ein Faraday'scher Käfig zum Abschirmen von Schaltkreisen leichter realisierbar.

Anhand einer Zeichnung, die den Schnitt durch das Gehäuse eines Kommunikations-Endgerätes zeigt, wird die Erfindung näher erläutert.

Das Gehäuse eines Endgerätes wird aus einer Kappe 10 aus Kunststoff und einer Bodenplatte 20 gebildet. Die Kappe 10 weist Dome 11 für eine Verschraubung der Bodenplatte 20 auf. Unterhalb der Bedienebene des Endgerätes ist z. B. eine Leiterplatte 30 angeordnet, die auf einer Seite eine Tastatur 31 und auf der gegenüberliegenden Seite die erforderlichen Schaltkreise und Steckanschlüsse AS, HS für die Anschlußleitung und die Handapparateschnur trägt. Die Leiterplatte 30 kann beispielsweise mit einem metallenen Netz auf der Seite der Tastatur 31 überzogen werden. Durch eine Schraubkontaktierung 21 wird dann ein Faraday'scher Käfig zwischen Bodenplatte 20 und Leiterplatte 30 gebildet. Hierzu ist die Bodenplatte 20 mit einer galvanischen Oberfläche versehen, z. B. verzinkt. Die Bodenplatte 20 ist im dargestellten Beispiel als Stanz- und Biegeteil gestaltet. Sie kann ebenso als ebenes Teil realisiert werden. Eine oder mehrere Abstützungen 22 dienen dem Halt der Leiterplatte 30.

Anstelle eines herkömmlichen Typenschildes werden die Typenschilddaten auf die Bodenplatte gedruckt und/oder in sie geprägt.

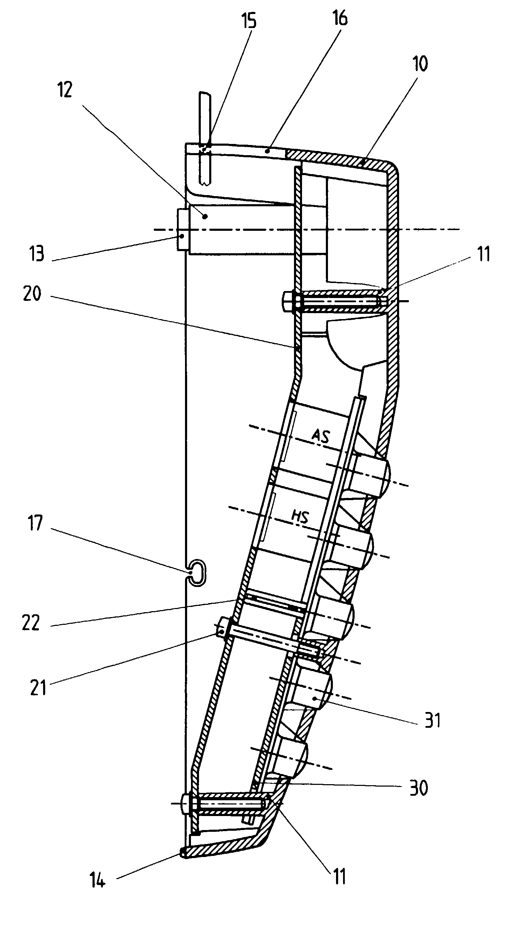

Die Kappe 10 weist außerdem zwei Dome 12 auf, von denen in der Zeichnung nur einer gezeigt ist. Diese Dome 12 dienen der Aufnahme von Füßen 13, z. B. Gummistandfüße. Zwei weitere Standfüße 14 sind als Ausformungen im den Domen 12 gegenüberliegenden Bereich der Kappe 10 angeordnet. Im hinteren Bereich der Kappe 10 liegt der Ausgang 15 für die Anschlußschnur und eine Griffmulde 16. Seitlich ist ein Durchbruch 17 für die Handapparateschnur vorgesehen.

## Patentansprüche

1. Gehäuse für ein Kommunikations-Endgerät, dadurch gekennzeichnet, daß das Gehäuse aus einer Kappe (10) und einer Bodenplatte (20) gebildet ist, wobei die Bodenplatte (20) aus Metall als Stanz- und Biegeteil gestaltet ist und in Verbindung mit einer Leiterplatte (30) und entsprechender Schraubkontaktierung (21) einen Faraday'schen Käfig bildet.

2. Gehäuse nach Anspruch 1, dadurch gekennzeichnet, daß die Leiterplatte (30) einseitig mit einem metallenen Netz überzogen ist.

3. Gehäuse nach Anspruch 1, dadurch gekennzeichnet, daß die Bodenplatte (20) mit einer galvanischen Oberfläche versehen ist.

4. Gehäuse nach Anspruch 1, dadurch gekennzeichnet, daß ein oder mehrere Abstützungen (22) zwischen Bodenplatte (20) und Leiterplatte (30) angeordnet sind.

5. Gehäuse nach Anspruch 1, dadurch gekennzeichnet, daß die Bodenplatte (20) und die Kappe (10) durch Verschraubungen verbunden sind.

6. Gehäuse nach Anspruch 1, dadurch gekennzeichnet, daß die Typenschilddaten auf die Bodenplatte (20) gedruckt und/oder in sie geprägt sind.

7. Gehäuse nach Anspruch 1, dadurch gekennzeichnet, daß die Kappe (10) Dome (12) zur Aufnahme von Füßen (13) aufweist.

8. Gehäuse nach Anspruch 1 und 7, dadurch gekennzeichnet, daß die Kappe (10) im den Domen (12) gegenüberliegenden Bereich zu zwei Standfüßen (14) geformt ist.
